Europäisches Patentamt

European Patent Office

Office européen des brevets

(19)

(11) Numéro de publication : **0 188 951 B1**

(12) **FASCICULE DE BREVET EUROPÉEN**

(45) Date de publication du fascicule du brevet :
20.09.89

(51) Int. Cl.⁴ : **F 01 L 1/46**, **B 65 D 85/68**, **B 23 P 19/00**

(21) Numéro de dépôt : **85402541.8**

(22) Date de dépôt : **18.12.85**

(54) **Procédé de montage d'un ensemble de pièces sur un organe support, notamment les pièces d'une commande de distribution d'un moteur thermique, et empreinte de conditionnement pour la mise en oeuvre de ce procédé.**

(30) Priorité : **21.12.84 FR 8419728**

(43) Date de publication de la demande :
**30.07.86 Bulletin 86/31**

(45) Mention de la délivrance du brevet :
**20.09.89 Bulletin 89/38**

(84) Etats contractants désignés :
**DE GB IT**

(56) Documents cités :
EP–A– 0 124 433
FR–A– 2 490 594
US–A– 3 813 987
PATENTS ABSTRACTS OF JAPAN, vol. 8, no. 69 (M-286) [1506], 31 mars 1984; & JP - A - 58 217 237 (NIPPON DENSO K.K.) 17.12.1983
IBM TECHNICAL DISCLOSURE BULLETIN, vol. 20, no. 7, décembre 1977, pages 2616-2618, New York, US; L.D. HOUSE et al.: "Automated pin assembly system"

(73) Titulaire : **COMPAGNIE DES TRANSMISSIONS MECANIQUES SEDIS Société dite:**
**102 Rue Danton**
**F-92306 Levallois Perret (FR)**

**SACHS INDUSTRIES S.A. (HURET ET MAILLARD REUNIS)**
**60 Avenue Félix-Faure**
**F-92000 Nanterre (FR)**

(72) Inventeur : **Sosson, Pierre**
**2 rue Laffitte**
**F-78600 Maisons Laffitte (FR)**
Inventeur : **Kohler, Bernard**
**·45 allée de la Forêt**
**F-78170 La Celle Saint Cloud (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention a pour objet un procédé de montage d'un ensemble de pièces sur un organe-support dans des positions et orientations relatives déterminées, notamment les pièces d'une commande de distribution d'un moteur thermique (voir par exemple EP-A-0124 433), ainsi qu'une empreinte de conditionnement pour la mise en oeuvre de ce procédé.

On sait que sur les lignes de montage actuelles des unités de production de moteurs, les diverses pièces nécessaires à l'entraînement de l'arbre à cames, et éventuellement d'autres accessoires tels que pompe à injection, sont montées successivement à un ou plusieurs postes de travail. Par exemple, on effectue le montage du pignon de vilebrequin, puis du ou des éléments de tension et de guidage, puis de la roue d'arbre et enfin on pose l'élément de transmission, constitué par une chaîne ou une courroie.

Au cours de ces opérations de montage, les spécifications de calage relatif entre les divers organes, en particulier le calage entre vilebrequin, arbre à cames et éventuellement pompe à injection, doivent être scrupuleusement respectées. On constate qu'actuellement le montage des pièces d'une commande de distribution de moteur thermique conduit ainsi à :

l'approvisionnement, la manutention, le stockage et la gestion d'un grand nombre de pièces,

un nombre élevé d'opérations de pose nécessitant un temps considérable, un personnel nombreux et une place importante,

des opérations multiples difficilement automatisables,

un soin et une attention dans ces opérations de pose qui, tout en exigeant un temps important, nécessitent des contrôles pour déceler une éventuelle erreur de montage pouvant provoquer la destruction du moteur à la première mise en marche.

L'invention a donc pour but de remédier à ces contraintes et inconvénients en proposant un procédé de montage des pièces sur le support, ainsi qu'une empreinte ou emballage de conditionnement pour la mise en oeuvre de ce procédé, qui améliore de manière substantielle la productivité et la fiabilité du montage des différentes pièces de l'ensemble.

Selon l'invention, le procédé de montage est caractérisé en ce qu'on dispose les pièces dans une empreinte ou elles sont prépositionnées, préorientées et maintenues dans des positions correspondant à celles qu'elles doivent occuper sur leur organe support, puis on présente cette empreinte, avec les pièces logées dans celle-ci, devant l'organe-support suivant l'orientation appropriée, on fixe lesdites pièces sur l'organe-support sans les extraire de l'empreinte, et après fixation des pièces on arrache l'empreinte.

Ce procédé, applicable à chaque cas où un ensemble de pièces doit être assemblé sur un organe-support dans des positions et orientations bien définies, trouve de nombreuses applications possibles dans l'industrie mécanique, notamment l'industrie automobile, mais aussi dans d'autres branches industrielles diverses telles que la construction électrique, l'électronique, le bâtiment, etc.

Dans le cas où le procédé visé par l'invention est appliqué au montage, sur un moteur thermique comportant un arbre à cames et un vilebrequin, des pièces d'une commande de distribution de ce moteur, il est caractérisé en ce qu'on conditionne les pièces de la commande dans une empreinte dans laquelle sont ménagés des logements de réception pour les différentes pièces, dimensionnés et agencés de manière à enserrer celles-ci pour les retenir en cas de retournement de l'empreinte et à assurer les positions et les orientations des pièces de la commande selon les positions et orientations exactes qu'elles doivent occuper sur le moteur, puis on présente cette empreinte avec les pièces devant le moteur, on fixe les pièces sur ce dernier, tandis qu'elles sont toujours dans l'empreinte, grâce à des ouvertures pratiquées dans cette dernière et qui permettent d'y faire passer des organes de fixation des pièces, puis on arrache l'empreinte.

L'invention a également pour objet l'empreinte permettant la mise en oeuvre de ce procédé et l'ensemble constitué par l'empreinte munie des pièces.

Suivant l'invention, l'empreinte de conditionnement d'un ensemble de pièces sur un organe support, destinée à la mise en oeuvre de ce procédé, est caractérisée en ce qu'elle comprend des logements agencés pour recevoir différentes pièces en les prépositionnant et en les préorientant les unes par rapport aux autres dans les positions exactes qu'elles doivent occuper sur l'organe-support, et ces logements sont dimensionnés de manière à enserrer les pièces pour les retenir durant la manutention de l'empreinte avant montage des pièces sur l'organe-support, des ouvertures étant de plus prévues dans l'empreinte pour permettre le passage, par l'arrière de l'empreinte, d'éléments de fixation des pièces sur l'organe-support, tandis que ces dernières sont encore dans l'empreinte.

Suivant un mode de réalisation de l'empreinte, destiné plus particulièrement à recevoir les pièces d'une commande de distribution de moteur thermique, l'empreinte comporte des logements agencés pour recevoir les pièces de cette commande, notamment une roue d'arbre à cames, un pignon de vilebrequin, des éléments de tension et de guidage d'une chaîne ou courroie de transmission associée au pignon et à la roue, et ces logements sont réalisés de façon que les pièces reçues dans ceux-ci soient prépositionnées et préorientées entre elles suivant les positions exactes qu'elles doivent occuper sur le moteur, afin de permettre le montage des pièces simultanément sur ce dernier.

L'empreinte étant réalisée par exemple en matière plastique sous la forme d'un bloc en mousse rigide ou d'une plaque thermoformée, les logements sont dimensionnés de façon que leurs parois enserrent les pièces correspondantes, et des ouvertures de passage d'organes de fixation des pièces sont ménagés dans l'empreinte, notamment pour des vis de fixation de la roue d'arbre à cames, du pignon de vilebrequin, d'un tendeur et d'un guide de l'élément de transmission, ainsi que le cas échéant pour d'autres accessoires tels qu'une roue de pompe à injection.

Ainsi, toutes les pièces de la commande de distribution étant au préalable prémontées et prépositionnées les unes par rapport aux autres dans les positions qu'elles doivent occuper une fois montées sur le moteur, il suffit de présenter d'un seul bloc l'empreinte garnie des pièces devant l'extrémité du moteur, puis d'éxecuter les opérations de fixation sans extraire au préalable les pièces de l'empreinte, ces opérations pouvant être avantageusement automatisées et exécutées simultanément.

D'autres particularités et avantages de l'invention apparaîtront au cours de la description qui va suivre, faite en référence aux dessins annexés qui en illustrent deux formes de réalisation à titre d'exemples non limitatifs :

la Figure 1 est une vue en plan d'une première forme de réalisation de l'empreinte ou emballage de conditionnement selon l'invention, contenant les différentes pièces d'une commande de distribution d'un moteur thermique, vue du côté à présenter sur le moteur :

la Figure 2 est une vue en coupe longitudinale de l'empreinte et des pièces de la Figure 1 suivant l'axe X-X ;

la Figure 3 est une vue en coupe transversale suivant la ligne Y-Y de la Figure 1 ;

la Figure 4 est une vue en coupe transversale suivant la ligne Z-Z de la Figure 1 ;

la Figure 5 est une vue en perspective illustrant l'opération de montage sur l'extrémité d'un moteur thermique, des pièces de la commande de distribution visibles aux Figures 1 à 4 ;

les Figures 6, 7, 8 et 9 sont des vues analogues respectivement aux Figures 1 à 4 d'une seconde forme de réalisation de l'empreinte selon l'invention.

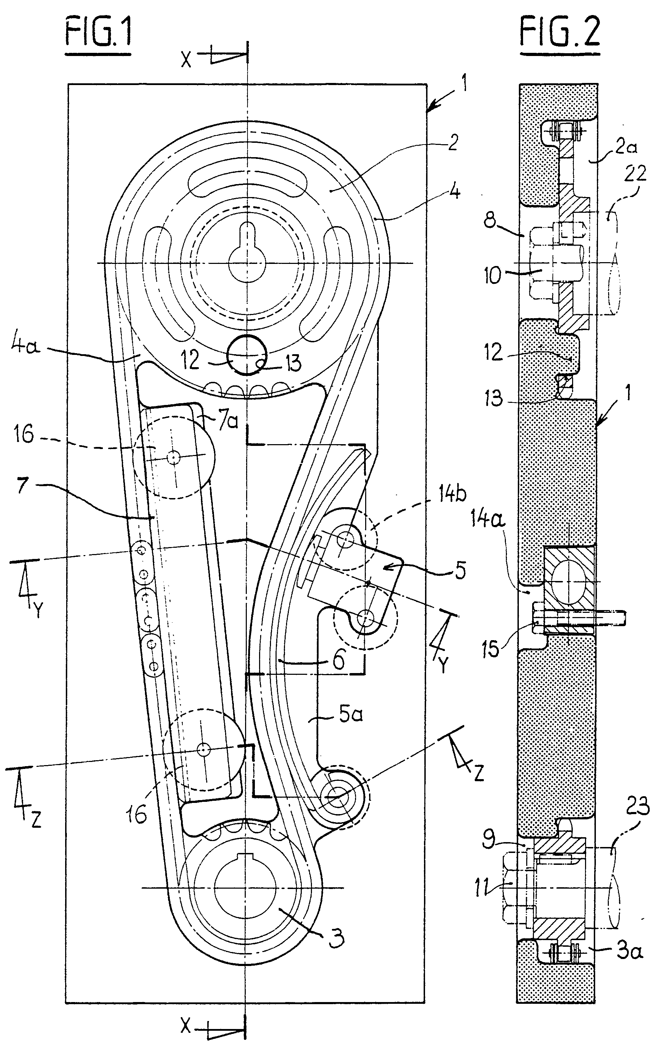

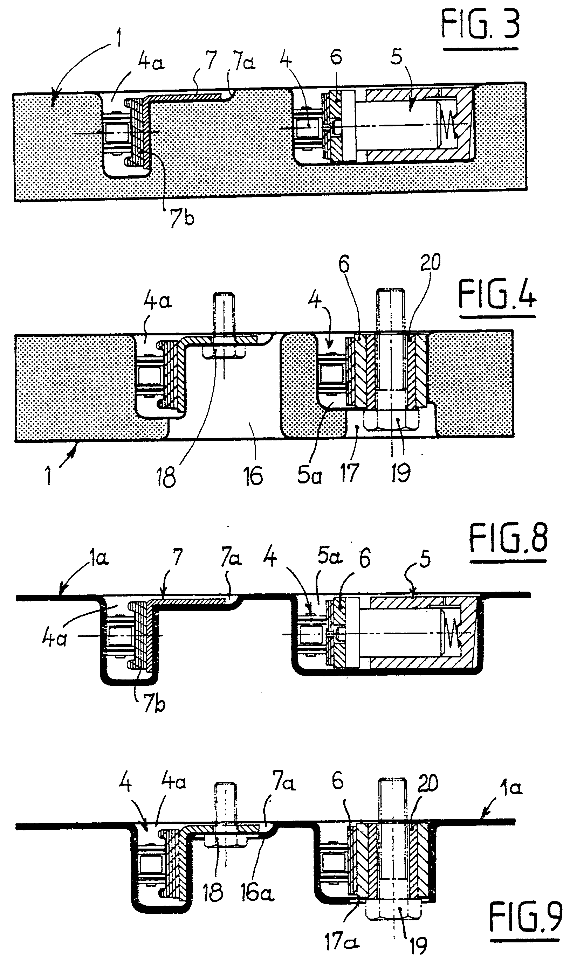

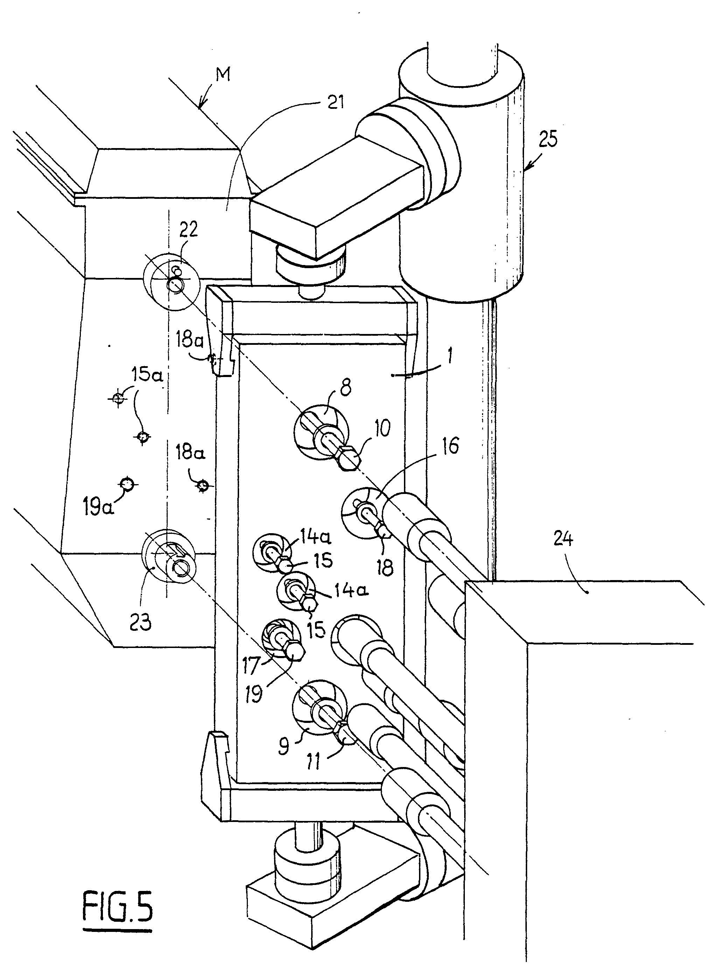

On voit aux Figures 1 à 5 une empreinte ou emballage 1, réalisée en une mousse de matière plastique rigide appropriée, telle qu'une mousse de polyéthylène, et qui est adaptée pour recevoir les pièces d'une commande de distribution d'un moteur thermique M (Figure 5) muni d'un arbre à cames 22 et d'un vilebrequin 23.

L'empreinte 1 comporte des logements agencés pour recevoir les pièces de cette commande, à savoir dans cet exemple : un logement 2a dans lequel peut être placée une roue 2 d'arbre à cames, un logement 3a recevant un pignon 3 de vilebrequin, un logement 5a qui débouche dans les logements 2a, 3a et qui reçoit un élément de transmission du mouvement entre le pignon 3 du vilebrequin 23 et la roue 2 de l'arbre à cames 22, constitué dans cet exemple par une chaîne 4 engrenant dans la roue 2 et sur le pignon 3, cette chaîne 4 s'étendant par conséquent également dans les logements 2a et 3a. Le logement 5a reçoit aussi une lame 6 faisant partie du tendeur 5 et qui vient s'appliquer sur le brin mou de la chaîne 4.

De son côté, le brin tendu de la chaîne 4 s'étend dans un logement 4a, prolongé latéralement et à sa partie supérieure par un autre logement 7a qui reçoit un guide 7 en forme de cornière, dont une aile s'étend dans le logement 4a et porte une garniture 7b d'appui, en contact avec le brin tendu de la chaîne 4.

L'empreinte 1 est percée d'une première ouverture ou dégagement 8 d'accès à une vis 10 de fixation de la roue 2 sur l'arbre à cames 22 (représenté en traits mixtes à la Figure 2), une seconde ouverture 9 débouchant dans le logement 3a et qui permet l'accès à une vis 11 de fixation du pignon 3 sur le vilebrequin 23 (en traits mixtes à la Figure 2). Deux autres dégagements 14a, 14b débouchent dans le logement 5a et autorisent l'accès à deux vis 15 de fixation du tendeur 5 sur le moteur M, deux dégagements 16 sont ménagés sous le guide 7 et permettent l'accès deux vis 18 de fixation de ce guide 7 sur le moteur, et enfin une ouverture ou dégagement 17 débouche dans le logement 5a au voisinage du pignon 3, et permet l'accès à une vis 19 d'articulation de la lame 6 autour d'une entretoise 20.

Les ouvertures 8, 9, 14a, 14b, 16, 17 forment des passages dans l'empreinte 1 et permettent donc l'accès par l'arrière de celle-ci aux vis respectives 10, 11, 15, 18 et 19.

Un détrompeur, constitué dans cet exemple par un plot 12 de l'empreinte 1, pénètre dans un trou 13 de la roue 2, afin de garantir sans ambiguïté son orientation par rapport au pignon 3.

L'extrémité du moteur M est percée de trous filetés 15a, 18a, et 19a adaptés pour recevoir respectivement les vis 15, 18, et 19 (Figure 5).

Tous les logements 2a, 3a, 4a, 5a... précités sont dimensionnés de façon à ce que les pièces correspondantes 2, 3, 4... ne puissent y être reçues qu'en exerçant un léger effort, afin que les parois de ces logements enserrent ces pièces et les maintiennent en place quelle que soit l'orientation de l'empreinte 1 équipée des pièces de cette commande de distribution durant sa manutention avant le montage sur le moteur M. En particulier ce serrage empêche les pièces de tomber en cas de retournement complet de l'empreinte 1.

Le procédé de montage visé par l'invention, et mis en oeuvre au moyen de l'empreinte 1 qui vient d'être décrite est le suivant.

Toutes les pièces décrites ci-dessus ayant été prépositionnées et préorientées convenablement dans leurs logements, dans les positions respectives exactes qu'elles doivent occuper sur l'extrémité du moteur M, on présente l'empreinte 1 avec les pièces verticalement devant le moteur M (Figure 5), on engage la roue 2 et le pignon 3 respectivement sur l'arbre à cames 22 et le vilebrequin 23 et on procède à leur fixation au moyen des vis 10, 11. On procède ensuite au vissage des éléments de tension 5 et de guidage 7, en vissant les vis correspondantes 15, 18 et 19 dans leurs trous 15a, 18a, 19a. En variante, la présentation de l'empreinte 1 peut être avantageusement effectuée par un robot 25, et tous les vissages peuvent être avantageusement exécutés de manière simultanée et automatique par une visseuse 24 (Figure 5).

Enfin, on arrache l'empreinte 1, le montage étant alors terminé.

L'invention procure des avantages importants pour les fabricants de moteurs :

l'approvisionnement, la manutention, le stockage et la gestion d'une seule fourniture : l'empreinte équipée de ses pièces ;

le montage de l'ensemble des pièces de la commande de distribution est réalisé simultanément sur un seul poste, ce qui permet un gain de temps, de personnel et de place considérable ;

l'opération de montage peut être automatisée grâce à un robot tel que 25 et à une visseuse telle que 24, tous les vissages étant alors simultanés ;

la mise en oeuvre de l'empreinte ou emballage 1 rend toute erreur de montage impossible, les spécifications de calage relatif entre les diverses pièces étant assurées par l'agencement des logements recevant ces pièces.

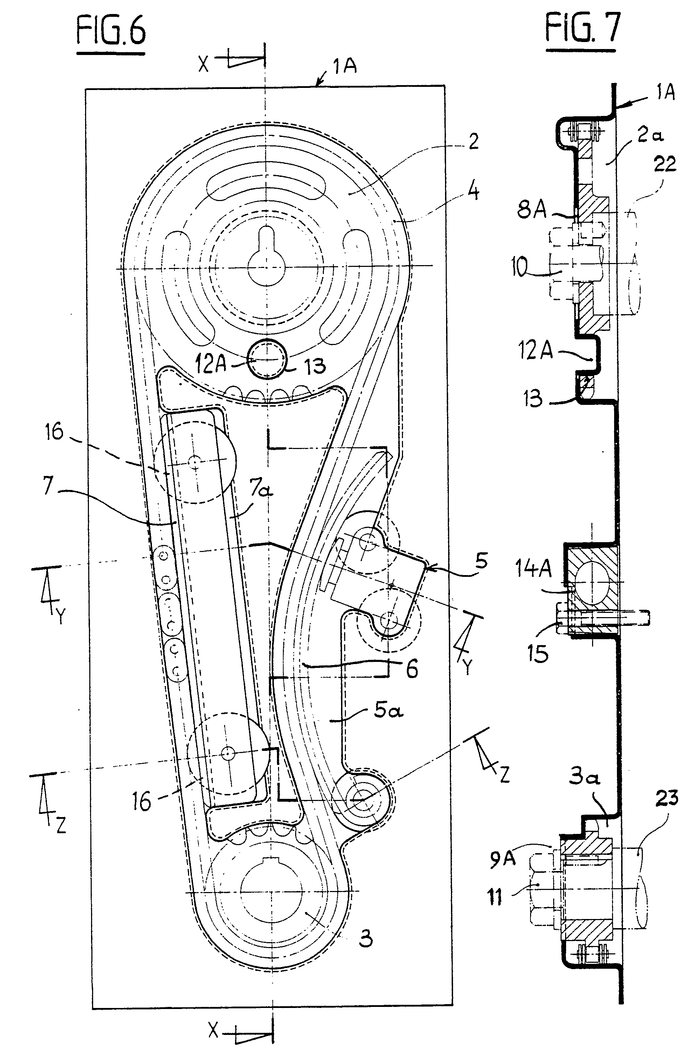

Le second mode de réalisation de l'empreinte conforme à l'invention, illustré aux Figures 6 à 9, diffère du premier en ce que l'empreinte 1A est ici constituée par une plaque thermoformée. Dans celle-ci, les logements 2a, 3a... des différentes pièces sont identiques à ceux de l'empreinte 1. Par contre, les ouvertures ou dégagements 8A, 9A, 14A, 16A, 17A, correspondant aux dégagements 8, 9, 14... de la première forme de réalisation, sont ici constituées par de simples lumières dans la plaque 1A, par rapport à laquelle font saillie les vis 10, 11, 18... Enfin, au plot 12 de l'empreinte 1 correspond dans cette seconde forme de réalisation un bossage creux 12A de centrage de la roue 2.

L'invention n'est pas limitée aux formes de réalisations décrites ci-dessus et peut comporter de nombreuses variantes d'exécution, notamment par le fait que divers autres accessoires non représentés, tels qu'une roue de pompe à injection peuvent être prévus dans des logements aménagés à cet effet dans l'empreinte. Enfin, comme déjà indiqué, l'invention est applicable à des domaines autres que l'industrie automobile.

## Revendications

1. Procédé de montage d'un ensemble de pièces sur un organe support (M) dans des positions et orientations déterminées, caractérisé en ce qu'on dispose les pièces (2, 3, 4, 5, 6, 7...) dans une empreinte (1, 1A) agencée pour qu'elles soient prépositionnées, préorientées et maintenues dans des positions correspondant à celles qu'elles doivent occuper sur leur organe support (M), puis on présente cette empreinte (1, 1A), avec les pièces logées dans celle-ci, devant l'organe support (M) suivant l'orientation appropriée afin de permettre le montage des pièces simultanément sur ce dernier, on fixe lesdites pièces sur l'organe support (M) sans les extraire de l'empreinte (1, 1A) et après fixation des pièces on arrache l'empreinte (1, 1A).

2. Procédé selon la revendication 1, appliqué au montage, sur un moteur thermique (M) comportant un arbre à cames (22) et un vilebrequin (23), des pièces (2-7) d'une commande de distribution de ce moteur, caractérisé en ce qu'on conditionne les pièces (2-7) de la commande dans une empreinte (1, 1A) dans laquelle sont ménagés des logements (2a, 3a, 4a, 5a) de réception pour les différentes pièces, dimensionnés et agencés de manière à enserrer celles-ci pour les retenir en cas de retournement de l'empreinte (1, 1A) et à assurer les positions et les orientations des pièces (2-7) de la commande selon les positions et orientations exactes qu'elles doivent occuper sur le moteur (M), puis on présente cette empreinte avec les pièces devant le moteur, on fixe les pièces (2-7) sur ce dernier tandis qu'elles sont toujours dans l'empreinte (1, 1A) grâce à des ouvertures (8, 9, 14a, 14b, 16, 17) percées dans cette dernière et qui permettent d'y faire passer des organes de fixation (10, 11, 15, 18, 19) des pièces, puis on arrache l'empreinte (1, 1A).

3. Procédé selon la revendication 2, selon lequel on dispose dans l'empreinte : une roue (2), d'arbre à cames (22), un pignon (3) de vilebrequin (23), un tendeur (5), et un guide (7) d'une chaîne ou d'une courroie (4) de transmission associée à la roue (2) d'arbre à cames (22) et au pignon (3) et en appui sur le tendeur (5) et le guide (7), ainsi qu'éventuellement d'autres accessoires tels qu'une roue de pompe à injection, ces pièces (2-7) étant positionnées dans leurs logements (2a...5a) en respectant exactement des spécifications de calage entre elles, puis on présente à l'extrémité du moteur (M) les pièces précitées ainsi prépositionnées et préorientées, on engage la roue (2) sur l'arbre à cames (22) ainsi que le pignon (3) sur le vilebrequin (23), on exécute le vissage de toutes les pièces (2, 3, 5, 6, 7) sur le moteur (M) à travers les ouvertures (8, 9, 14a, 14b, 16, 17) prévues dans l'empreinte pour le passage des vis de fixation (10, 11, 15, 18, 19), caractérisé en ce que ces opérations de présentation et de vissage sont automatisées grâce à un robot (25) et à une visseuse (24), après quoi on arrache l'empreinte (1, 1A).

4. Empreinte de conditionnement d'un ensemble de pièces sur un organe support (M) destinée à la mise en oeuvre du procédé selon la revendication 1, caractérisée en ce qu'elle comprend des logements (2a, 3a, 4a, 5a) agencés pour recevoir les différentes pièces (2-7) en les prépositionnant et en les préorientant les unes par rapport aux autres dans les positions exactes qu'elles doivent occuper sur l'organe support (M), en ce que ces logements sont dimensionnés de manière à enserrer les pièces (2-7) pour les retenir durant la manutention de l'empreinte (1, 1A) avant montage des pièces sur l'organe support (M), des ouvertures (8, 9, 16, 17 ; 8A, 9A, 16A, 17A) étant de plus prévues dans l'empreinte (1, 1A) pour permettre le passage par l'arrière de l'empreinte, d'éléments de fixation (10, 11, 15, 18, 19) des pièces sur l'organe support (M), tandis que ces dernières sont encore dans l'empreinte.

5. Empreinte selon la revendication, caractérisée en ce qu'elle est pourvue d'un détrompeur tel qu'un plot (12, 12A) apte à s'engager dans un trou (13) de la roue (2) d'arbre à cames (22) afin de préorienter cette roue par rapport au pignon (3).

6. Empreinte selon l'une des revendications 4 et 5, caractérisée en ce qu'elle est réalisée par exemple en matière plastique sous la forme d'un bloc en mousse rigide ou d'une plaque thermoformée.

## Claims

1. Method for fitting a set of component parts on a support element (M) in given positions and orientations, characterized in that the component parts (2, 3, 4, 5, 6, 7...) are disposed in a mould (1, 1A), arranged so that they should be pre-positioned, pre-orientated and maintained in positions corresponding to those they must occupy on their support element (M), then this mould (1, 1A) with the component parts accommodated therein are presented in front of the support element (M) in accordance with the appropriate orientation, so as to allow the component parts to be simultaneously fitted on the latter, the said component parts are secured on the support element (M) without extracting them from the mould (1, 1A), and after the component parts have been secured, the mould (1, 1A) is stripped off.

2. A method according to claim 1, applied to the fitting on a heat engine (M) comprising a camshaft (22) and a crankshaft (23), of component parts (2-7) of a timing gear for this engine, characterized in that the component parts (2-7) of the timing gear are packed in a mould (1, 1A) wherein there are arranged recesses (2a, 3a, 4a, 5a) for receiving these various component parts dimensioned and arranged so as to grip the latter to retain them in case the mould (1, 1A) is turned over, and to secure the positioning and orientation of the component parts (2-7) of the timing gear according to the exact positions and orientations they must occupy on the engine (M), then this mould with the component parts is presented in front of the engine, the component parts (2-7) are fixed to the latter while they are still in the mould (1, 1A), thanks to openings (8, 9, 14a, 14b, 16, 17) pierced in the latter and which allow the means (10, 11, 15, 18 ,19) for fixing the component parts to pass into them, then the mould (1, 1A) is stripped off.

3. A method according to claim 2, in accordance therewith, there are disposed in the mould a wheel (2) of a camshaft (22), a pinion (3) of a crankshaft (23), a tensioning device (5) and a guide (7) for a transmission chain or belt (4) associated with the wheel (2) of the camshaft (22) and the pinion (3) and bearing against the tensioning device (5) and the guide (7) and optionally, other accessories such as a wheel of an injection pump, these component parts (2, 7) being positioned in their recesses (2a,...5a) in exact conformity with their specified interspacing, then the above mentioned components thus pre-positioned and pre-orientated, are presented at the end of the engine (M), the wheel (2) is engaged on the camshaft (22) and the pinion (3) on the crankshaft (23), all these component parts (2, 3, 5, 6, 7) are screwed to the engine through the openings (8, 9, 14a, 14b, 16, 17) provided in the mould for the passing of the fixing screws (10, 11, 15, 18, 19) characterized in that these presenting and screwing operations are automated by means of a robot (25) and a screwing device (24), whereupon the mould (1, 1A) is stripped off.

4. A mould for packaging a set of components on a support element (M) intended for the implementation of the method according to claim 1, characterized in that it comprises recesses (2a, 3a, 4a, 5a) arranged to receive the various component parts (2-7) by pre-positioning and pre-orientating them, one in relation to the others, in the exact positions they must occupy on the support element (M), and in that these recesses are dimensioned so as to grip these component parts (2-7) to retain them while the mould (1, 1A) is handled before the component parts are fitted on the support element (M), provision being moreover made for openings (8, 9, 16, 17 ; 8A, 9A, 16A, 17A), to allow elements (10, 11, 15, 18, 19) for fixing the component parts to the support element (M) to pass through the back of the mould, while the latter are still in the mould.

5. A mould according to claim 4, characterized in that it is provided with a locating means such as a boss (12, 12A) capable of engagement in a hole (13) of the wheel (2) of the camshaft (22) in order to pre-orientate this wheel in relation to the pinion (3).

6. A mould according to one of claims 4 and 5, characterized in that it is made, for example, of a plastic material in the form of a rigid foam block or a thermoformed sheet.

## Patentansprüche

1. Verfahren zur Montage eines Satzes von Teilen auf einem Trägerelement (M) in bestimmten Lagen und Orientierungen, dadurch gekennzeichnet, daß man die Teile (2, 3, 4, 5, 6, 7...) in einem Vertiefungsformstück (1, 1A) anordnet, das so eingerichtet ist, daß sie vorpositioniert, vororientiert und in Stellungen gehalten werden die denjenigen entsprechen, die sie auf dem Trägerelement (M) einzunehmen haben, man dann dieses Vertiefungsformstück (1, 1A) mit den in ihm aufgenommenen Teilen vor das Trägerelement (M) mit einer Orientierung bringt, die geeignet ist, die gleichzeitige Montage der Teile auf letzterem zu ermöglichen, man die Teile auf dem Trägerelement (M) befestigt, ohne sie aus dem Vertiefungsformstück (1, 1A) herauszuziehen, und man nach der Befestigung der Teile das Vertiefungsformstück (1, 1A) abnimmt.

2. Verfahren nach Anspruch 1, angewandt auf die Montage, auf einem Verbrennungsmotor (M) mit einer Nockenwelle (22) und einer Kurbelwelle (23), von Teilen (2-7) eines Nockenwellenantriebs dieses Motors, dadurch gekennzeichnet, daß man die Teile (2-7) des Antriebs in ein Vertiefungsformstück (1, 1A) packt, in welchem Aufnahmen (2a, 3a, 4a, 5a) für die verschiedenen Teile ausgespart sind, die so dimensioniert und eingerichtet sind, daß sie diese umschließen, so daß sie im Falle eines Wendens des Vertiefungsformstücks (1, 1A) festgehalten werden, und daß die Lagen und Orientierungen der Teile (2-7) des Antriebs gemäß den genauen Lagen und Orientierungen, die sie auf dem Motor (M) einnehmen müssen, gewährleistet sind, man dann dieses Vertiefungsformstück mit den Teilen vor den Motor bringt, die Teile (2-7) an letzterem befestigt, während sie immer noch in dem Vertiefungsformstück (1, 1A) sind, dank Öffnungen (8, 9, 14a, 14b, 16, 17) die letzteres durchsetzen und ein Durchführen von Befestigungselementen (10, 11, 15, 18, 19) für die Teile gestatten, und man dann das Vertiefungsformstück (1, 1A) abnimmt.

3. Verfahren nach Anspruch 2, nach welchem man in dem Vertiefungsformstück anordnet : ein Nockenwellen (22) -Rad (2), ein Kurbelwellen (23) -Zahnrad (3), ein Spannglied (5) und eine Führung (7) für eine (n) dem Nockenwellen (22) -Rad (2) und dem Zahnrad (3) zugeordnete (n) und am Spannglied (5) und der Führung (7) anliegende (n) Transmissionskette oder -riemen (4), sowie ggfs. weitere Zubehörteile wie ein Einspritzpumpenrad, wobei diese Teile (2-7) in ihren Aufnahmen (2a..., 5a) unter genauer Einhaltung der Einstellungsspezifikationen zwischen ihnen geordnet werden, man nachfolgend die so vorpositionierten und vororientierten vorgenannten Teile vor das Ende des Motors (M) bringt, man das Rad (2) auf der Nockenwelle (22) sowie das Zahnrad (3) auf der Kurbelwelle (23) anbringt, man die Verschraubung aller Teile (2, 3, 5, 6, 7) auf dem Motor (M) durch die Öffnungen (8, 9, 14a, 14b, 16, 17) die in dem Vertiefungsformstück für den Durchtritt von Befestigungsschrauben (10, 11, 15, 18, 19) vorgesehen sind, durchführt, dadurch gekennzeichnet, daß dieses Vorgänge des Vorbringens und der Verschraubung dank eines Roboters (25) und einesn Maschinenschraubers (24) automatisiert sind, wonach man das Vertiefungsformstück (1, 1A) abnimmt.

4. Vertiefungsformstück zum Packen eines Satzes von Teilen auf ein Trägerelement (M) zur Durchführung des Verfahrens nach Anspruch 1, dadurch gekennzeichnet, daß es Aufnahmen (2a, 3a, 4a, 5a), die für eine Aufnahme der verschiedenen Teile (2-7) unter Voranordnung und unter Vororientierung derselben relativ zueinander in den genauen Lagen, die sie auf dem Trägerelement (M) einnehmen müssen, eingerichtet sind, daß diese Aufnahmen so dimensioniert sind, daß sie die Teile (2-7) für ein Festhalten derselben während der Handhabung des Vertiefungsformstücks (1, 1A) vor der Montage der Teile auf dem Trägerelement (M) umschließen, wobei außerdem Öffnungen (8, 9, 16, 17 ; 8A, 9A, 16A, 17A) in dem Vertiefungsformstück (1, 1A) vorgesehen sind, damit ein Durchtritt von Befestigungselementen (10, 11, 15, 18, 19) zur Befestigung der Teile auf dem Trägerelement (M) von der rückwärtigen Seite des Vertiefungsformstücks möglich ist, während sich die Teile noch auf dem Vertiefungsformstück befinden.

5. Vertiefungsformstück nach Anspruch 4, dadurch gekennzeichnet, daß es mit einer Unverwechselbarkeitseinrichtung, wie einem Stift (12, 12A), versehen ist, der für ein Eingreifen in ein Loch (13) des Nockenwellen (22) -Rades (2) zur Vororientierung dieses Rades bezüglich des Zahnrades (3) eingerichtet ist.

6. Vertiefungsformstück nach einem der Ansprüche 4 und 5, dadurch gekennzeichnet, daß es beispielsweise aus Kunststoff in Form eines Blockes aus Hartschaum oder einer warmgeformten Platte hergestellt ist.

FIG.1

FIG.2

FIG. 3

FIG.4

FIG.8

FIG.9

FIG.5

FIG.6

FIG. 7